# EUROPÄISCHE PATENTSCHRIFT

(11) **EP 2 114 223 B1**
(45) Veröffentlichungstag und Bekanntmachung des Hinweises auf die Patenterteilung: **01.02.2012**
(21) Anmeldenummer: 08700526.0
(22) Anmeldetag: 23.01.2008
(51) Int. Cl.: A47J 37/12

(54) **FRITTIERVORRICHTUNG UND VERFAHREN ZUM FRITTIEREN VON FRITTIERGUT**
DEEP-FRYING DEVICE AND METHOD FOR DEEP-FRYING PRODUCTS
DISPOSITIF DE FRITURE ET PROCÉDÉ POUR FRIRE DES PRODUITS À FRIRE

(30) Priorität: 26.01.2007 CH 127072007
(43) Veröffentlichungstag der Anmeldung: 11.11.2009
(73) Patentinhaber: Inducs A.G., 9100 Herisau (CH)
(72) Erfinder: FUCHS, Christian, CH-8180 Bülach (CH)
(74) Vertreter: Frei Patent Attorneys
(86) Internationale Anmeldenummer: PCT/CH2008/000021
(87) Internationale Veröffentlichungsnummer: WO 2008/089590

(56) Entgegenhaltungen:
- DE-A1- 3 602 021
- DE-U1- 9 422 106
- US-A1- 2003 010 767

## Beschreibung

Die Erfindung liegt auf dem Gebiet der Frittiervorrichtungen und der Verfahren zum Frittieren von Frittiergut.

Die Bedeutung von Frittiervorrichtungen oder Fritteusen ist trotz einer Tendenz zu fettarmen Nahrungsmitteln gross. Jedoch wird - voraussichtlich genau deshalb-Frittiergut kritisch betrachtet und der Qualität der Zubereitung vermehrte Aufmerksamkeit geschenkt. In Bezug auf eine Frittiervorrichtung und Frittiermethoden sind hauptsächlich ernährungsphysiologische, kulinarische, sowie wirtschaftliche Aspekte massgebend.

Beim Frittieren wird ein Lebensmittel, das Frittiergut, durch Eintauchen in Speiseöl oder -fett, das Frittiermedium, bei Temperaturen über dem Siedepunkt von Wasser gegart. Das Frittiermedium dient dabei zum Hitzetransfer und ist verantwortlich für die Ausbildung des typischen Frittieraromas, für die Farbe und die Bildung einer knusprigen Kruste. Während ein Garvörgang im Inneren eines Frittierguts und eine Krustenbildung (durch Abtrockung/Dehydration) im Aussenbereich erwünscht ist, sind Verderb des Frittiermediums und die Bildung unerwünschter Substanzen, beispielsweise Acrylamid, möglichst zu vermeiden. Das Frittiermedium ändert sich im Verlauf von Zeit und Temperatur durch Fettabbau und durch chemische und physikalische Vorgänge aufgrund einer Wechselwirkung zwischen Frittiermedium, Wasser, Frittiergut, Nahrungsmittelabfälle und Luftsauerstoff. Abbauprodukte haben Auswirkungen auf den Rauchpunkt des Frittiermediums, d.h. diejenige Temperatur, bei welcher das Frittiermedium zu rauchen beginnt, auf die Schaumbildung und die Viskosität. Zudem führt Frittieren bei zu niedrigen Temperaturen zu hohen Fettgehalten in Lebensmitteln. Die Verwendung von belastetem Frittiergut und unsachgemässes Frittieren, z.B. bei zu hohen /tiefen Temperaturen führt somit zu wenig bekömmlichem Frittiergut und zur Bildung von unerwünschten Substanzen. Insbesondere Acrylamidbildung kann durch Frittiertemperaturen um 180°C minimiert werden.

In Bezug auf wirtschaftliche Aspekte, hat sich in anderen Bereichen der Lebensmittelzubereitung gezeigt, dass mittels Heizung durch Induktion Energie sehr direkt und ohne grosse Verluste an einen gewünschten Ort gebracht werden kann. Dies gilt insbesondere für Verfahren, in denen direkt in einem ferromagnetischen Material, z. B. eines Pfannenbodens oder einer Grillplatte, Wirbelströme und dadurch Wärme erzeugt wird.

Es sind Schriften bekannt, in denen auch Frittiervorrichtungen mittels Induktion beheizt werden. In JP2005-319066 werden die Induktionsheizmittel im Frittierbehälter selber angeordnet. Dies ist nachteilig, da eine solche Vorrichtung schnell und einfach zu reinigen sein sollte. Dies ist mit zusätzlichen Elementen, welche im Frittierbehälter selber angeordnet sind nicht oder nur schlecht möglich. Allfällige Öl- und Reinigungsrückstände wirken sich zudem negativ auf ein frisches Frittiermedium aus. Beispielsweise beschleunigen sie den Fettverderb und die Schaumbildung. Letztere führt aufgrund der höheren Oberfläche zu erhöhter Oxidation des Fetts.

Auch der in JP2003-339555 beschrieben Frittierbehälter ist diesbezüglich nicht optimal. Der Behälter ist länglich gestaltet, um ein Absenken von Partikeln in eine untere Kaltzone zu beschleunigen. Ein solches Abführen von Partikeln ist ein wichtiger Bestandteil einer Fritteuse, da kleine Partikel schnell verkohlen und damit den Fettverderb beschleunigen. Kleine Teile können sich zudem negativ auf die Hitzestabilität eines Frittiermediums auswirken. Durch die längliche Gestaltung des Behälters wird ein grosses Ölvolumen benötigt, welches jedoch grossteils nicht zum Frittieren zur Verfügung steht. Es ist auch kaum anzunehmen, dass das ringförmig angebrachte Heizelement das Grossvolumen an Frittiermedium schnell und effizient aufzuheizen und auf einer konstanten Temperatur zu halten vermag.

In der Gebrauchsmusterschrift DE 94 22 106 wird das Frittiermedium induktiv erhitzt. Dies geschieht durch eine Induktionsspule im Bodenbereich, welche mit dem ferritischen Boden des Frittierbehälters und einem ferritischen. Frittierkorb zusammenwirkt. Nachteilig bei diesem System ist unter anderem, dass eine Betriebstemperatur nur bei eingesetztem Frittierkorb erreicht wird. Frittiergut wird somit zuerst kühlen Frittiertemperaturen ausgesetzt, was sich negativ auf eine vermehrte Ölaufnahme ins Frittiergut auswirken kann. Auch ist eine Abstimmung von Induktionsspule und Bereichen, in denen Wärme induziert werden soll, z.B. bezüglich gegenseitiger Positionierung, nur schwer möglich.

Die Temperatur hat insofern auch Auswirkung auf ernährungsphysiologische Aspekte, in dem sie die Wahl des Frittiermediums beeinflusst. Ernährungsphysiologisch günstige Öle mit mehreren ungesättigten Fettsäuren sind in Bezug auf Temperaturstabilität und Oxidationsanfälligkeit durch Luftsauerstoff weniger stabil wie beispielsweise feste Fette mit überwiegend gesättigten Fettsäuren. In herkömmlichen Frittiervorrichtungen ist die Verwendung von solchen Ölen deshalb wenig vorteilhaft, da sie örtlich überhitzt werden, schnell verderben und oft ersetzt werden müssen, um noch ein gutes Frittierresultat zu erreichen.

Aufgabe der Erfindung besteht nun darin, eine verbesserte Frittiervorrichtung und ein Verfahren zum Frittieren von Frittiergut zu schaffen. Es ist insbesondere Aufgabe der Erfindung eine Frittiervorrichtung und ein Verfahren zu schaffen, mit welchen ein Frittieren in Bezug auf Frittiergut und Frittiermedium optimiert wird.

Diese Aufgabe wird gelöst durch die Frittiervorrichtung und das Verfahren, wie sie in den Patentansprüchen definiert sind.

Die vorliegende Frittiervorrichtung weist einen Frittierbehälter mit einer Kaltzone im unteren Bereich des Frittierbehälters und je einem Heizelement in einem Bodenbereich und in mindestens einem seitlichen Bereich des Frittierbehälters auf, wobei die Heizelemente ausserhalb des Frittierbehälters angeordnet sind. Die Frittiervorrichtung weist weiter mindestens eine Temperaturmessvorrichtung auf, wobei die Temperatur zur Regelung der Heizleistung verwendet wird. Über eine Regeleinheit kann jedes Heizelement individuell angesteuert und geregelt und bei mehreren Temperaturmessvorrichtung vorzugsweise auch diese individuell abgefragt werden.

Vorzugsweise ist jedem Heizelement genau eine Temperaturmessvorrichtung zugeordnet, welche in dem Bereich misst, der vom Heizelement erwärmt wird. Um den Wärmeeintrag in ein Frittiermedium, beispielsweise Öl oder Fett, zu optimieren, ist das mindestens eine seitliche Heizelement vorzugsweise in einer oberen Hälfte des Frittierbehälters angeordnet.

Durch die spezielle Anordnung der Heizelemente und ein damit verbundener Wärmeeintrag in ein Frittiermedium wird eine viel homogenere Wärmeverteilung in einem Frittiermedium erreicht. Die Wärme wird direkt den Bereichen zugeführt, wo sie benötigt wird, d.h. wo das Einbringen von Frittiergut eine Abkühlwig des Frittiermediums bewirkt. Es werden damit grosse Temperaturschwankungen in einem Volumen eines Frittiermediums verhindert und es ist im wesentlichen eine Konstanthaltung der Frittiertemperatur erreichbar.

Durch den induktiven Wärmeeintrag in ein Frittiermedium, beispielsweise durch die Verwendung von Induktionsspulen als Heizelemente und einem induktiv erhitzbaren Frittierbehälter, wird ein Leistungseintrag in ein Volumen des Frittiermediums optimiert. Wärme wird damit nicht nur dort eingebracht wo sie gebraucht wird, sondern auch dort erzeugt. Diese Energieeffizienz wird durch eine genaue Temperaturkontrolle und eine thermostatische Regelung eines Energieeintrags in die Heizelemente unterstützt.

Durch letztere Massnahmen werden zudem Überhitzungen eines Frittiermediums und zu hohe und zu kühle Frittiertemperaturen vermieden bzw. letztere sehr stark reduziert. Ohne ein Überhitzen kann allgemein ein Verderb des Frittiermediums sehr stark verzögert werden und ein Verkohlen von Partikeln wird verhindert oder verringert. Auch ist es durch eine genaue und schonende Temperaturführung möglich, Frittiermedien zu verwenden, welche zwar aufgrund ihrer mehrfach ungesättigten Fettsäuren physiologisch empfehlenswert sind, aber sehr sensibel auf zu hohe Temperaturen reagieren. Ein Frittieren bei zu kühlen Temperaturen kommt in herkömmlichen Fritteusen vermehrt vor, wenn beispielsweise viel Frittiergut auf einmal in eine Fritteuse eingebracht wird. Wird das Frittieren bei zu kühlen Temperaturen reduziert, werden Fettansammlungen im Frittiergut minimiert und ein optimales Frittierresultat erreicht.

Eine Temperaturmessung erfolgt vorzugsweise kontaktlos, in dem diese über mindestens eine ein Element eines Hochfrequenzschwingkreises bildende Messspule mittels elektromagnetischer Felder abgefragt wird. Eine solche kontaktlose Temperaturmessung mittels el.-mag. Strahlung ist in den Schriften EP 0 858 722 anhand eines Kochsystems und in WO 2004/016139 anhand eines Bratgerätes beschrieben. Auf die kontaktlose Temperaturmessung und im Falle der WO 2004/016139 auch die thermostatische Regelung eines Leistungseintrags in die Induktionsspulen, sei hiermit explizit verwiesen. Insbesondere wird auf die Gestaltung und Anordnung der Induktions- und Messspulen, die verwendeten Materialien und das Durchführen der Messung verwiesen. Im Speziellen eignet sich die in WO 2004/16139 beschriebene Heiz- und Messvorrichtung, sowie die Leistungsregelung für die vorliegende Frittiervorrichtung, da dort ebenfalls direkt eine fest angebrachte, einen Teil der Vorrichtung bildende, Platte erhitzt und überwacht wird. Im Gegensatz zu der in WO 2004/16139 beschriebenen Vorrichtung, wird in der vorliegenden Frittiervorrichtung jedoch ein grosses Volumen eines Frittiermediums erhitzt, wobei die Temperaturführung sehr kritisch ist und insbesondere ein Überhitzen verhindert werden muss. Durch eine gezielte und gesteuerte Energiezufuhr wird eine optimale Zirkulation des Ölvolumens, und damit auch eine gleichmässige Temperaturverteilung, erreicht. Dies ist durch den speziellen Aufbau der Frittiervorrichtung und die Art der Wärmezufuhr und -kontrolle gegeben. Zudem bestehen in Bezug auf Frittiervorrichtungen andere Anforderungen an ein verwendetes Fett oder Öl und an die Reinigung des Behälters, da jeweils viel grössere Mengen an teurem Öl oder Fett ersetzt werden müssen.

Ein einfacher Aufbau des Frittierbehälters, ohne jegliche Elemente im Inneren der Behälters, insbesondere ohne Heizelemente oder Temperatursensoren/- messvorrichtungen oder keine komplizierten Behälterstrukturen, sind aufgrund einer einfachen Reinigung des Behälters bevorzugt. Dies ist in Bezug auf eine für die Reinigung benötigte Zeit und in Bezug auf ein Erneuern des Fettmediums relevant. Selbst geringe verunreinigte Resten oder Reinigungsrückstände beschleunigen den Verderb eines frischen Frittiermediums. Zudem weisen Heizelemente, welche sich in herkömmlichen Fritteusen im Öl befinden Oberflächentemperaturen von bis zu 280°C auf. Das Öl wird entsprechend lokal verbrannt und die Qualität und Lebensdauer ist entsprechend beschränkt.

In einer bevorzugten Ausführungsform wird ein Frittiermedium nur mittels einer in einem Bodenbereich angebrachten Induktionsspule auf eine Betriebstemperatur erhitzt, wobei die Temperatur des Frittiermediums im Bodenbereich gemessen wird und zur Regelung der Leistungszufuhr in die Induktionsspule verwendet wird. Dies geschieht solange, bis eine Betriebstemperatur erreicht ist. In einer Betriebsphase, also während des Frittierens, wird in einem oberen Bereich des Frittierbehälters, über, vorzugsweise zwei sich gegenüberliegenden Seiten eines Behälters befindlichen, Induktionsspulen Wärme zugeführt und die Temperatur im oberen Bereich über den Spulen zugeordnete Temperaturmessvorrichtungen gemessen. Beides geschieht solange bis ein Unterschied von gemessener zu Betriebstemperatur ausgeglichen ist.

In der US Schrift US 2003/001767 wird ein Kochsystem mit Heizeintrag in einem Bodenbereich und in den seitlichen Bereich beschrieben. Dabei wird eine konventionelle Heizspule unterhalb eines Bodens eines tiefen Kochbehälters angeordnet. Um nicht nur einen Wärmeeintrag in den Bodenbereich zu haben, wird ein flexibles Heizband um den Kochbehälter gewickelt. Bodenheizspule oder Heizband können individuell oder kombiniert betrieben werden. Obwohl in der Schrift erwähnt wird, dass dieses System auch als Fritteuse verwendet werden kann, ist dieses kaum dafür geeignet oder dafür gedacht. In der Schrift wird nicht auf allgemeine Probleme bei Fritteusen eingegangen. Es wird keine Ölzirkulation oder ein entsprechender Heizeintrag, z.B. während einer Aufheizphase oder einer Betriebsphase erwähnt. Es werden auch keine Kaltzonen offenbart, welche insbesondere bei Fritteusen für Grossküchen und in der Gastronomie praktisch unerlässlich sind. Zudem werden Nachteile bestehender Fritteusen nicht behoben. Es wird kein Wärmeeintrag mittels Induktionsheizung und damit verbundene bereits erwähnte Vorteile offenbart. Auch eine positionsabhängige Temperaturmessung, d.h. eine möglichst genaue Messung der Temperatur des Frittierguts an kritischen Stellen und eine direkte Regelung eines Leistungseintrags wird nicht offenbart.

Im Gegensatz dazu ist es mit einer erfindungsgemässen Anordnung möglich, sehr effizient ein grosses Öl- bzw. Fettvolumen gleichmässig zu erhitzen und während eines Frittiervorgangs auf der gewünschten Temperatur zu halten. Eine differenzierte und empfindliche Temperaturmessung im Bereich aller Heizelemente und ein Temperatur gesteuerter Leistungseintrag in die Heizelemente ermöglicht zudem, dass bereits geringste Temperaturschwankungen erkannt und ausgeglichen werden. Hohe Temperaturverluste und damit verbundene hohe Wärmeeinträge, um solche Verluste wieder auszugleichen, werden vermieden. Dies ist einerseits energieeffizient, andererseits werden damit aber auch lokale Öl- und Fettüberhitzungen vermieden.

Es sind diverse Varianten des Verfahrens denkbar. Beispielsweise kann in einer Aufheizphase nur via Bodenspule geheizt, aber auch via obere Temperaturmesspulen gemessen werden. Beispielsweise können auch bei einem gewünschten sehr schnellen Aufheizen sämtliche Heizspulen von Anfang an in Betrieb sei. In der Betriebsphase kann auch nur via obere Heizelemente geheizt, aber mit oberen und unteren Temperaturmessvorrichtungen gemessen werden.

Wichtig bei allen Verfahren ist eine bedarfsbezogene Energiezufuhr in die Heizspulen, um eine optimale Zirkulation des Frittiermediums zu erzielen.

Beispielhafte, bevorzugte Ausführungsformen der erfindungsgemässen Frittiervorrichtung werden anhand der folgenden schematisch dargestellten Figuren beschrieben. Dabei zeigen:
- Figur 1: eine Seitenansicht einer Frittiervorrichtung;
- Figur 2: eine Aufsicht auf die Frittiervornchtung gemäss Fig. 1;
- Figur 3: Aufbau eines Mess- und Heizbereichs

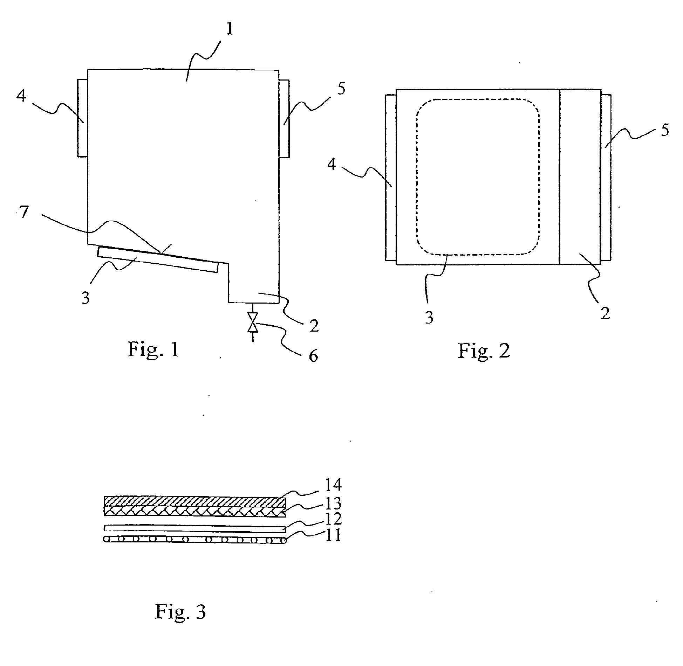

**Figur 1** zeigt eine seitliche Ansicht eines im wesentlichen quader- oder rechteckförmigen Frittierbehälters 1 mit einer Kaltzone 2. Die Kaltzone ist als längliche Vertiefung im Behälterboden 7 entlang einer Seite des Behälters ausgebildet und typischerweise aus der Behälterwand selber geformt. Der Behälterboden 7 ist gegen die Kaltzone hin leicht abfallend gestaltet, so dass ein Frittiermedium wie Fett oder Öl, aber auch Partikel, aufgrund der Schwerkraft zu dieser Kaltzone hin abfliessen und in der Vertiefung gesammelt werden. Das Frittiermedium in diesem Bereich weist eine geringere Temperatur, auf als im restlichen Behälter. Allfällige Partikel können dadurch nicht wieder durch Konvektion ins übrige Frittiermedium gelangen und dieses verschmutzen und/oder verkohlen. Im unteren Bereich der Kaltzone, vorzugsweise an einer tiefsten Stelle der Vertiefung -der Boden der Vertiefung kann dazu gegebenenfalls ebenfalls abfallend gestaltet sein - befindet sich ein Ablauf, durch welchen das Frittiermedium, Partikel, aber auch eine Reinigungsflüssigkeit aus dem Frittierbehälter auslaufen kann. Der Ablauf ist mit einem Ventil 6 versehen. Es kann auch ein Partikelfilter eingebaut sein, so dass das Frittiermedium beim Auslaufen direkt gereinigt und bei Bedarf wiederverwendet werden kann.

Der Behälter ist induktiv erhitzbar. Er ist typischerweise aus einem ferromagnetisches Material enthaltenden Material gefertigt, z. B. behandelter Edelstahl, Chromstahl oder verchromt oder aus einem Mehrschichtenmaterial mit mindestens einer ferromagnetischen oder induktiv erhitzbaren Schicht. Diese induktiv erhitzbare Schicht ist eine aussenliegende, nahe der Innenseite des Behälters liegende Schicht oder bildet die Innenseite des Frittierbehälters. Die Innenfläche des Behälters ist vorzugsweise dergestalt, dass er einfach zu reinigen ist.

Aussen am Frittierbehälter befindet sich im Bodenbereich eine Induktionsspule 3, sowie aussen, seitlich am Behälter je eine seitliche Induktionsspule 4, 5. Die Bodeninduktionsspule ist, wie in **Figur 2** gestrichelt eingezeichnet, eine Rechteckspule, welche sich im wesentlichen über die gesamte Bodenfläche des Frittierbehälters, mit Ausnahme der Kaltzone, erstreckt. Die Ausdehnung der Spule schliesst vorzugsweise direkt an die Vertiefung der Kaltzone an und hört wenig vor dem seitliche Ende der Behälterwand (Boden) auf. Die seitlichen Induktionsspulen befinden sich an zwei sich gegenüberliegenden Seiten des Frittierbehälters, wobei die eine seitliche Spule 5 hier parallel zur Kaltzone 2 angebracht ist. Die seitlichen Induktionsspulen erstrecken sich vorzugsweise ebenfalls über die gesamte Breite des Frittierbehälters, jedoch nur in einem oberen Bereich des Behälters 1. Vorzugsweise befinden sich die seitlichen Spulen in den oberen 2/3 der Behälters, bevorzugt oberhalb, insbesondere vollständig oberhalb einer gedachten Mittelebene des Behälters.

Vorzugsweise ist jeder Induktionsspule eine eigene Temperaturmessvorrichtung zugeordnet. Dies kann ein herkömmlicher Temperatursensor sein, welcher sich bevorzugt, - zwecks einfacher Reinigung des Behälters oder Wartung der Temperatureinrichtung - ebenfalls aussen im Bereich der Induktionsspulen befindet. In einer bevorzugten Ausführungsform der Frittiervorrichtung wird die Temperaturmessung jedoch kontaktlos, mittels einer als Element eines Hochfrequenzschwingkreises ausgebildeten Messspule vorgenommen. Eine solche Mess- und Heizanordnung ist in Figur 3 näher beschrieben. Die Induktionsspulen, aber auch die kombinierten Mess- und Heizanordnungen sind vorzugsweise fest, aber abnehmbar an der äusseren Behälterwandung befestigt. Es ist auch möglich einen Behälter zu konstruieren, in dem diese Anordnung in der Behälterwandung, also in den Behälter selber, integriert ist.

Im Behälter ist typischerweise eine maximale Füllhöhe für ein Frittiermedium vorgesehen. Seitliche Induktions- und Messspulen erstrecken sich dann bevorzugt nicht über und möglichst genau bis an diese maximale Füllhöhe. In **Figur 3** ist ein bevorzugter Aufbau des Mess- und Heizbereichs der Frittiervorrichtung gezeigt. Unter einer induktiv erhitzbaren Behälterwandung 14, von welcher nur ein Ausschnitt gezeigt ist, befindet sich eine Isolationsschicht 13, eine Messpule 12, welche auch eine aus zwei Messspulen bestehende Messspuleneinheit sein kann, und eine Induktionsspule 11.

Die Isolationsschicht 13, z. B eine hochisolierende Keramikfaserschicht, isoliert die Messspule/n und die Induktionsspule und allfällige in der Nähe befindlichen Regel- und Steuereinheiten vor der heissen Behälterwand. Die Isolationsschicht kann auch noch weitere Eigenschaften, z. B. eine Feuchteisolation, aufweisen oder je nach Material von Messvorrichtung und Induktionsspule auch ein Luftspalt sein. Die Induktionsspule 11 ist beispielsweise eine Kupferspule. Sie wird bevorzugt flächig als Spirale in einer Rechteckform ausgebildet, so dass im wesentlichen die gesamte Fläche eines rechteckigen Behälterbodens oder Behälterwand gleichmässig erhitzt werden kann (Bei einem runden Behälter ist die Boden-Induktionsspule entsprechend flächig und rund gestaltet). Vorzugsweise liegen zwei gleichartige Messspulen der Messvorrichtung nebeneinander und umfassen je etwa die Hälfte der von der Induktionsspule abgedeckten Fläche. Solche Messspulenpaare sind dann typischerweise gegensinnig so miteinander verschaltet, dass sich die in ihnen von der Induktionsspule induzierten Spannungen gegenseitig aufheben.

Die Messspulen bzw. Messspuleneinheit sind vorzugsweise separat abfragbar. Dies erlaubt eine flächendeckende Temperaturmessung über den Bereich der Messspule/Messspuleneinheit. Um Störsignale der Induktionsspule bei einer Temperaturmessung zu vermeiden, kann eine Energiezufuhr in die Induktionsspule kurzzeitig unterbrochen werden, um die Temperaturmessung unabhängig durchführen zu können.

Die Frittiervorrichtung umfasst oder ist mit eine Energieversorgung verbunden (nicht eingezeichnet). Diese kann in einem gemeinsamen Gehäuse mit dem Frittierbehälter untergebracht sein. Die Vorrichtung kann Schaltmittel zum Wählen verschiedener Betriebstemperaturen im Bereich von Zimmertemperatur bis 180°C °C, z. B. in 10°-20°C oder vorzugsweise kleineren, z.B. 2°C Schritten, aufweisen. Die Betriebstemperaturen sind die Temperaturen, die ein Frittiermedium erreichen soll, d.h. bei der Frittiergut frittiert werden soll. Ein Schaltmittel ist entsprechend mit einer Regel- und Steuereinheit, z. B. einem Computerchip oder Mikroprozessor, verbunden, welcher wiederum mit der Messspuleneinheit und der Energieversorgung verbunden ist. Die Vorrichtung weist vorzugsweise auch Anzeigemittel zum Anzeigen der aktuellen Frittiertemperatur oder weitere Angaben, z. B. die Betriebstemperatur oder die aktuelle Heizleistung. Die Frittiervorrichtung kann zudem mit einer Halterung für ein Frittiergitter versehen werden.

Die Energiezufuhr in die Induktionsspulen ist vorzugsweise derart geregelt, dass sie einsetzt, sobald eine eingestellte Betriebstemperatur über der gemessenen Isttemperatur liegt, und dass sie ausschaltet, sobald die Isttemperatur über der Betriebstemperatur liegt, so dass eine verzögerungsfreie, elektronische Regelung der Temperatur in Echtzeit entsteht. Dabei kann jeweils die volle Leistung geschaltet werden. Es ist aber auch möglich eine dosierte Energiezufuhr zu bewirken. Insbesondere wird bevorzugt die Temperatur des Frittiermediums in der Nähe der einzelnen Induktionsspulen mittels einer nur der jeweiligen Induktionsspule zugeordneten Temperaturmessvorrichtung kontrolliert.

Mit einer solch kombinierten Mess- und Heizvorrichtung mit einer individuellen Ansteuerung der unterschiedlich angeordneten Induktionsspulen können in den Messbereichen bereits kleinste Temperaturschwankungen von unter 1°C, z. B. 0.5°C, festgestellt werden. Insbesondere können auch auf einzelne Regionen beschränkte Temperaturschwankungen schneller, gezielter und insbesondere für ein Frittiergut schonender zugeführt werden. Überhitzungen und zu kalte Frittiertemperaturen werden dadurch verhindert, letztere zumindest stark reduziert. Die Reaktionszeiten auf Temperaturschwankungen werden typischerweise äusserst kurz, beispielsweise im Millisekundenbereich, z.B. bei 0.5 sek, gehalten. Dadurch bleibt der Energieverbrauch der Fritteuse minimal, da insbesondere keine grossen Temperaturverluste entstehen, die kompensiert werden müssen.

Die Häufigkeit einer Temperaturmessung kann im wesentlichen frei gewählt werden. Eine Temperaturmessung wird beispielsweise mehrere Male pro Sekunde durchgeführt.

In einem bevorzugten Verfahren erfolgt ein Aufheizen des Frittiermediums auf eine Frittiertemperatur von ca. 180° C vor einem Frittervorgang durch die Bodenspule 3 alleine. Es hat sich gezeigt, dass durch die Bodenspule eine grosse im wesentlichen horizontale Fläche homogen aufgeheizt wird. Diese steigt ungestört auf und sorgt für eine sehr homogene Wärmeverteilung bis auf die Kaltzone- im gesamten Volumen. Beim Frittieren werden nun die seitlichen Temperaturmessvorrichtungen und Induktionsspulen 'zugeschaltet'. Wird ein kaltes Frittiergut in den Frittierbehälter eingebracht, sinkt die Temperatur des Frittiermediums hauptsächlich in diesem oberen Bereich. Die Öldurchmischung im Bereich des Frittierguts, also in einem oberen Bereich des Frittierbehälters, geschieht während des Frittiervorgangs sehr schnell, so dass mit den seitlichen Temperaturmessvorrichtungen auch sehr schnell Temperaturschwankungen im Frittiermedium messbar sind. Mit den seitlichen Heizelementen wird ein seitlicher heisser 'Vorhang' erzeugt, welcher schnell aufsteigt und an der Oberfläche eine Art heisser 'Deckel' bildet. Dadurch wird eine Abkühlung im oberen Bereich durch die seitlichen Heizelementen ausgeglichen. Gegebenenfalls kann in der Betriebsphase des Frittierverfahrens auch nur mit den seitlichen Spulen geheizt werden. Durch die spezielle Anordnung der Heizelemente in Boden- und Seitenbereichen, sowie durch eine genaue Temperaturüberwachung, wird eine Zirkulation des Frittiermediums erreicht, so dass sich eine homogene Temperaturverteilung im Medium ergibt, ohne dass das Medium -auch nicht lokal- überhitzt wird. Damit werden mit der erfindungsgemässen Vorrichtung und dem Verfahren beispielsweise sowohl hohe Lebensdauern auch von empfindlichen Ölen, wie auch ein Schmelzen von harten Fetten ohne dessen Überhitzung erreicht.

Beispielhafte Leistungswerte für Induktionsspulen für eine Fritteuse, welche ein Fassungsvolumen für Öl oder Fett von ca. 181 aufweist sind: 3.5kW für die Bodeninduktionsspule 3 und 2.5 kW für die seitlichen Induktionsspulen 4, 5.

## Patentansprüche

1. Verfahren zum Frittieren von Frittiergut mittels Induktion, mit einer Aufheizphase und einer Betriebsphase, wobei in der Aufheizphase Wärme in einem Bodenbereich eines induktiv erhitzbaren Frittierbehälters zugeführt wird, bis eine Betriebstemperatur eines sich im Frittierbehälter befindlichen Frittiermediums erreicht ist, und in der Betriebsphase Wärme durch induktives Erhitzen eines oberen Bereichs des Frittierbehälters in den oberen Bereich des Frittierbehälters zugeführt wird, zur Konstanthaltung der Betriebstemperatur des Frittiermediums.

2. Verfahren nach Anspruch 1, wobei in der Aufheizphase eine Temperaturmessung mindestens im Bodenbereich erfolgt und in der Betriebsphase die Betriebstemperatur des Frittiermediums im oberen Bereich des Frittierbehälters gemessen wird, und
sobald ein Temperaturabfall im oberen Bereich gemessen wird, dem oberen Bereich solange Wärme zugeführt wird, bis ein Unterschied von gemessener zu Betriebstemperatur ausgeglichen ist.

3. Verfahren nach Anspruch 1 oder 2, wobei die Temperatur über mindestens eine ein Element eines Hochfrequenzschwingkreises bildende Messspule (12) kontaktlos mittels elektromagnetischer Strahlung gemessen wird.

4. Verfahren nach einem der Ansprüche 1-3, wobei eine Temperaturmessung zur Regelung der Leistung in ein Heizelement verwendet wird, und wobei bei mehreren Temperaturmessvorrichtungen diese individuell abgefragt werden und jedes Heizelement individuell geregelt wird.

5. Verfahren nach einem der Ansprüche 1-4, wobei während der Aufheizphase und der Betriebsphase die Wärmezufuhr und Temperaturmessung jeweils im Bodenbereich und im oberen Bereich geschieht.

6. Induktions-Frittiervorrichtung aufweisend einen Frittierbehälter (1) mit einer Kaltzone (2) in einem unteren Bereich des Frittierbehälters, je einer Induktionsspule (3, 4, 5, 11) in einem Bodenbereich und in mindestens einem seitlichen Bereich des Frittierbehälters, wobei die Induktionsspulen ausserhalb des Frittierbehälters angeordnet sind und der Frittierbehälter induktiv erhitzbares Material beinhaltet, weiter aufweisend mindestens eine Temperaturrnessvorrichtung, wobei die Temperatur zur thermostatischen Regelung der Heizleistung verwendbar ist, und eine Regeleinheit zum individuellen Ansteuern jedes einzelnen Heizelements.

7. Induktions-Frittiervorrichtung nach Anspruch 6 wobei jeder Induktionsspule (3, 4, 5, 11) genau eine Temperaturmessvorrichtung zugeordnet ist.

8. Induktions-Frittiervorrichtung nach Anspruch 6 oder 7, wobei die Temperaturmessvorrichtung mindestens eine ein Element eines Hochfrequenzschwingkreises bildende Messspule (12) beinhaltet und, dass mit der mindestens einen Messspule die Temperatur des Frittierbehälters (1) kontaktlos mittels elektromagnetischer Strahlung abfragbar ist.

9. Induktions-Frittiervorrichtung nach einem der Ansprüche 6-8, wobei die Induktionsspule (3, 4, 5, 11) im Bodenbereich neben der Kaltzone (2) und die mindestens eine seitliche Induktionsspule in einer oberen Hälfte des Frittierbehälters (1) angeordnet ist.

10. Induktions-Frittiervörrichtung nach einem der Ansprüche 6-9, wobei sich die Induktionsspulen (3, 4, 5, 11) im wesentlichen über eine gesamte Breite oder einen gesamten Umfang des Frittierbehälters (1) erstrecken.

## Claims

1. Method for deep-frying foodstuffs for deep-frying by means of induction, with a heating-up - and an operating phase, wherein during the heating-up phase heat is supplied in a bottom zone of an inductively heatable deep-frying vessel, until an operating temperature of a deep-frying medium inside the deep-frying vessel is reached, and in the operating phase heat is supplied to the upper zone of the deep-frying vessel through inductive heating of an upper zone of the deep-frying vessel for the purpose of maintaining the operating temperature of the deep-frying medium.

2. Method in accordance with claim 1, wherein during the heating-up phase a temperature measurement takes place at least in the bottom zone and during the operating phase the operating temperature of the deep-frying medium is measured in the upper zone of the deep-frying vessel, and, as soon as a temperature reduction is measured in the upper zone, the upper zone is supplied with heat until a difference between the measured temperature and the operating temperature has been eliminated.

3. Method in accordance with claim 1 or 2, wherein the temperature is measured contact-free by means at least one measuring coil (12) forming an element of a high-frequency oscillating circuit by means of electro-magnetic radiation.

4. Method in accordance with one of the claims 1-3, wherein a temperature measurement is utilised for controlling the power in a heating element, and wherein in case of several temperature measuring devices these are individually polled and every heating element is controlled individually.

5. Method in accordance with one of the claims 1-4, wherein during the heating-up phase and the operating phase the heat supply and the temperature measurement takes place in the bottom zone and in the upper zone respectively.

6. Induction deep-frying device comprising a deep-frying vessel (1) with a cold zone (2) in a lower zone of the deep-frying vessel, each respectively with an induction coil (3, 4, 5, 11) in a bottom zone and in at least one lateral zone of the deep-frying vessel, wherein the induction coils are arranged outside the deep-frying vessel and the deep-frying vessel comprises inductively heatable material, further comprising at least one temperature measuring device, wherein the temperature is capable of being utilised for the purpose of thermostatic controlling of the heating power, and comprising a control unit for the individual driving of each individual heating element.

7. Induction deep-frying device in accordance with claim 6, wherein to every induction coil (3, 4, 5, 11) precisely one temperature measuring device is assigned.

8. Induction deep-frying device in accordance with claim 6 or 7, wherein the temperature measuring device comprises at least one measuring coil (12) forming an element of a high-frequency oscillating circuit and, that with the at least one measuring coil the temperature of the deep-frying vessel (1) is capable of being polled contact-free by means of electro-magnetic radiation.

9. Induction deep-frying device in accordance with one of the claims 6-8, wherein the induction coils (3, 4, 5, 11) is arranged in the bottom zone adjacent to the cold zone (2) and the at least one lateral induction coil is arranged in an upper half of the deep-frying vessel (1).

10. Induction deep-frying device in accordance with one of the claims 6-9, wherein the induction coils (3, 4, 5, 11) essentially extend across the whole width or a whole circumference of the deep-frying vessel (1).

## Revendications

1. Procédé pour faire frire des produits à frire au moyen d'une induction, comportant une phase de chauffe et une phase de service, dans lequel, dans la phase de chauffe, de la chaleur est amenée dans une zone de fond d'un récipient de friture qui peut être échauffé par induction, jusqu'à une température de service d'une matière de friture qui se trouve dans le récipient de friture, et, dans la phase de service, de la chaleur est amenée dans la zone supérieure du récipient de friture par chauffage inductif d'une zone supérieure du récipient de friture, pour le maintien constant de la température de service de la matière de friture.

2. Procédé selon la revendication 1, dans lequel, dans la phase de chauffe, une mesure de la température a lieu au moins dans la zone de fond et, dans la phase de service, la température de service de la matière de friture est mesurée dans la zone supérieure du récipient de friture, et dès qu'une chute de température est mesurée dans la zone supérieure, de la chaleur est amenée dans la zone supérieure jusqu'à ce qu'une différence entre la température mesurée et la température de service soit compensée.

3. Procédé selon l'une ou l'autre des revendications 1 et 2, dans lequel la température est mesurée par au moins un élément d'un circuit d'oscillations à haute fréquence qui forme une bobine de mesure (12) sans contact au moyen d'un rayonnement électromagnétique.

4. Procédé selon l'une des revendications 1 à 3, dans lequel une mesure de la température est utilisée pour la régulation de la puissance dans un élément de chauffe et dans lequel, en présence de plusieurs dispositifs de mesure de la température, ceux-ci sont interrogés individuellement et chaque élément de chauffe est régulé individuellement.

5. Procédé selon l'une des revendications 1 à 4, dans lequel, pendant la phase de chauffe et la phase de service, l'apport de chaleur et la mesure de la température sont effectués respectivement dans la zone de fond et dans la zone supérieure.

6. Dispositif de friture par induction, qui présente un récipient de friture (1) avec une zone de froid (2) dans une partie inférieure du récipient de friture, avec chacun une bobine d'induction (3, 4, 5, 11) dans une zone de fond et dans au moins une partie latérale du récipient de friture, dans lequel les bobines d'induction sont agencées en dehors du récipient de friture et dans lequel le récipient de friture contient un matériau qui peut être échauffé par induction, et lequel présente en outre au moins un dispositif de mesure de la température et dans lequel la température peut être utilisée pour la régulation thermostatique de la puissance de chauffe et comporte une unité de régulation pour la commande individuelle de chaque élément de chauffe individuel.

7. Dispositif de friture par induction selon la revendication 6, dans lequel chaque bobine d'induction (3, 4, 5, 11) est attribuée exactement à un dispositif de mesure de la température.

8. Dispositif de friture par induction selon l'une ou l'autre des revendications 6 et 7, dans lequel le dispositif de mesure de la température contient au moins une bobine de mesure (12) qui forme un élément d'un circuit d'oscillations à haute fréquence et dans lequel, avec la au moins une bobine de mesure, la température du récipient de friture (1) peut être interrogée sans contact au moyen d'un rayonnement électromagnétique.

9. Dispositif de friture par induction selon l'une des revendications 6 à 8, dans lequel la bobine d'induction (3, 4, 5, 11) est agencée dans la zone de fond à côté de la zone de froid (2) et dans lequel la au moins une bobine d'induction latérale est agencée dans une moitié supérieure du récipient de friture (1).

10. Dispositif de friture par induction selon l'une des revendications 6 à 9, dans lequel les bobines d'induction (3, 4, 5, 11) s'étendent essentiellement sur une largeur complète ou sur une circonférence complète du récipient de friture (1).
